# EUROPÄISCHE PATENTANMELDUNG

(11) **EP 0 909 083 A1**
(43) Veröffentlichungstag der Anmeldung: **14.04.1999**
(21) Anmeldenummer: 98118999.6
(22) Anmeldetag: 08.10.1998
(51) Int. Cl.: H04M 11/04, G08B 25/08

(54) **Überwachungseinrichtung mit Senderkennung**

(30) Priorität: 13.10.1997 DE 19744989
(71) Anmelder: Wagner, Andrea, 73760 Ostfeldern (DE)
(72) Erfinder: Wagner, Andrea, 73760 Ostfeldern (DE)
(74) Vertreter: Ostertag, Reinhard

(57) **Zusammenfassung**

Eine Überwachungseinrichtung umfaßt ein Mobiltelefon (28), das zusätzlich über einen Steuereingang zum Anwählen einer vorgegebenen Nummer aktiviert werden kann. Das Mobiltelefon (28) ist so programmiert, daß eine in einem Kennungsspeicher (50) abgelegte Information nach Herstellen einer Verbindung abgegeben wird. Die Steuerklemme des Mobiltelefones (28) wird durch das Ausgangssignal eines ODER-Gliedes (44) aktiviert, dessen Eingänge mit verschiedenen auf Umweltparameter ansprechenden Fühlern (18) verbunden sind.

## Beschreibung

Die Erfindung betrifft eine Überwachungseinrichtung gemäß dem Oberbegriff des Anspruches 1.

Derartige Überwachungseinrichtungen sind in Verbindung mit der Gebäudeüberwachung bekannt. Stellt die Überwachungseinrichtung fest, daß in dem überwachten Gebäude ein Brand ausgebrochen ist oder ein Einbruchsversuch unternommen wird, wird gesteuert durch die mit den Überwachungsfühlern zusammenarbeitende Auswerteeinheit eine selbstwählende Telefoneinheit aktiviert, welche dann ein Alarmsignal an eine vorgegebene zweite Telefoneinheit über das öffentliche Telefonnetz sendet.

Derartige Überwachungseinrichtungen sind in der Praxis komplexe computergestützte Anlagen und sind teuer.

Durch die vorliegende Erfindung soll eine Überwachungseinrichtung gemäß dem Oberbegriff des Anspruches 1 geschaffen werden, welche preiswerter herzustellen ist.

Diese Aufgabe ist erfindungsgemäß gelöst durch eine Überwachungseinrichtung mit den im Anspruch 1 angegebenen Merkmalen.

Die erfindungsgemäße Überwachungseinrichtung macht davon Gebrauch, daß digitale oder ISDN-Telefonanlagen so betrieben werden können, daß sie nach Herstellen einer Verbindung zunächst eine Senderkennung übermitteln, die auf dem Display der angerufenen Telefoneinheit angezeigt wird. Hiervon kann man erfindungsgemäß dazu zu Überwachungszwecken Gebrauch machen, indem die übermittelte Senderkennung als Alarm verwendet wird: Weiß nämlich der angerufene Teilnehmer, daß sich bei der ersten Telefoneinheit im Moment keine zum normalen Gebrauch derselben autorisierte Person befindet, so bedeutet die Anzeige der zur ersten Telefoneinheit gehörenden Senderkennung einen Alarm. Auf diesen Alarm kann dann der angerufene Teilnehmer zum Ort der Überwachungseinrichtung gehen und nach dem Rechten sehen.

Vorteilhafte Weiterbildungen der Erfindung sind in Unteransprüchen angegeben.

Mit den Weiterbildungen der Erfindung gemäß den Ansprüchen 2 und 3 wird erreicht, daß die Vorteile der digitalen Telefontechnik zu geringen apparativen Kosten erhalten. Mobil-Telefone werden in großen Stückzahlen zu geringen Kosten hergestellt. Noch günstigere Einkaufsmöglichkeiten ergeben sich durch Zugabe eines Mobiltelefons zu einem Mobiltelefon-Vertrag oder durch Kauf eines gebrauchten Mobiltelefones.

Außerdem benötigt man am Überwachungsort bzw. am Meldeort kein öffentliches Stromnetz und auch keinen konventionellen Telefonanschluß. Die Überwachungseinrichtung kann somit an beliebigen abgelegenen Orten verwendet werden.

Mit der Weiterbildung der Erfindung gemäß Anspruch 3 wird als weiterer Vorteil erhalten, daß der Alarm überall dort empfangen wird, wohin der Benutzer das zweite Mobiltelefon mitnimmt.

Die Weiterbildung der Erfindung gemäß Anspruch 4 gestattet es, eine Vielzahl unterschiedlicher Parameter, die gleichermaßen ein Nachschauen vor Ort notwendig machen, zusammenzufassen. Man erhält somit zu sehr geringen Kosten eine umfassende Überwachung.

Die Weiterbildung der Erfindung gemäß Anspruch 5 gestattet es, sehr unterschiedliche Fühler an die Auswerteeinheit anzuschließen, z.B. aktive oder passive Fühler und solche Fühler, die von Hause aus Ausgangssignale sehr unterschiedlicher Größe bereitstellen.

Die Weiterbildung der Erfindung gemäß Anspruch 6 ist im Hinblick auf Störfreiheit des Arbeitens der Fühler, Pegelanpassung und Auslösen von Alarmen nur bei Vorliegen vorgegebener Fühler-Ausgangssignale von Vorteil.

Die Weiterbildung der Erfindung gemäß Anspruch 7 erleichtert das Erkennen von Alarmen, ohne daß man die Telefonnummer der ersten Telefoneinheit auswendig wissen muß.

Die Weiterbildung der Erfindung gemäß Anspruch 9 ermöglicht es, ebenso wie die Weiterbildung gemäß Anspruch 2, die Überwachungseinrichtung auch an solchen Orten zu verwenden, bei denen kein Anschluß an das öffentliche Stromnetz besteht.

Bei einer Überwachungseinrichtung gemäß Anspruch 10 wird ein Alarm auch dann ausgelöst, wenn ein Eindringling oder zum Gebrauch der ersten Telefoneinheit nicht autorisiertes Personal die erste Telefoneinheit dazu benutzen will, eine andere Nummer anzurufen als die Nummer der zweiten Telefoneinheit (was sowieso zur Alarmauslösung führen würde).

Mit der Weiterbildung der Erfindung gemäß Anspruch 11 wird die Überwachungseinrichtung gegen Ausfall durch Sabotage bzw. leere Spannungsquelle geschützt.

Nachstehend wird die Erfindung anhand von Ausführungsbeispielen unter Bezugnahme auf die Zeichnung näher erläutert. In dieser zeigen:
- Figur 1:: eine schematische Ansicht eines Stalles und einer Koppel, die durch eine Mobiltelefone enthaltende Überwachungseinrichtung überwacht werden;
- Figur 2:: ein Blockschaltbild der in Figur 1 gezeigten Überwachungseinrichtung; und
- Figur 3:: die Verwendung der unter Bezugnahme auf die Figuren 1 und 2 beschriebenen Überwachungseinrichtung zur Überwachung von Personen oder Tieren.

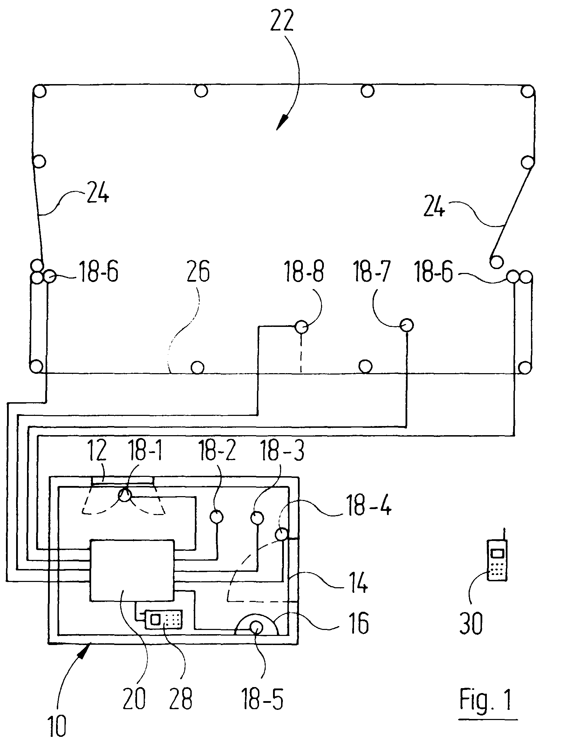

In Figur 1 ist bei 10 schematisch ein Stall wiedergegeben, der ein Fenster 12 und eine Tür 14 aufweist. Als Beispiel für eine Versorgungseinrichtung für Tiere ist bei 16 eine Trinkschale gezeigt.

Im Stall 10 sind verschiedene Fühler vorgesehen: ein Fensterkontakt 18-1, der anspricht, wenn das Fenster 12 geöffnet wird; ein Mikrofon 18-2, welches auf den Schall im Stall 10 anspricht; ein Brandsensor 18-3, der auf Rauch oder Infrarotstrahlung im Inneren des Stalles 10 anspricht; ein Türkontakt 18-4, der anspricht, wenn die Tür 14 geöffnet wird; und ein Trinkschalensensor 18-5, der anspricht, wenn in der Trinkschale 16 kein Wasser mehr abgegeben werden kann.

Es versteht sich, daß im Inneren des Stalles 10 noch weitere Fühler vorgesehen werden können, um weitere Parameter zu überwachen, z.B. das Eindringen von Wasser durch Überlaufen der Trinkschale 16. Die vorgenannten Fühler dienen als Beispiele für auf Umweltparameter ansprechende Fühler.

Die Ausgänge der Fühler 18 sind mit zugeordneten Eingängen einer Auswerteeinheit 20 verbunden.

Eine schematisch bei 22 gezeigte Koppel hat Koppeltore 24, deren Schließzustand durch Torkontakte 18-6 überwacht wird. Auf der Koppel ist ferner ein Temperaturfühler 18-7 vogesehen, der auf die Umgebungstemperatur anspricht.

Ferner ist an einen elektrischen Zaun 26 der Koppel ein Spannungsfühler 18-8 angeschlossen, der überwacht, ob der elektrische Zaun richtig unter Spannung steht.

Die Fühler 18-6 bis 18-8 sind weitere Beispiele für auf Umgebungsparameter ansprechende Fühler. Auch diese Fühler sind mit der Auswerteeinheit 20 verbunden.

Die Auswerteeinheit 20 arbeitet grob gesprochen so, daß sie immer dann ein Ausgangssignal bereitstellt, wenn das Ausgangssignal eines der Fühler 18 in einem abnormale Verhältnisse anzeigenden Bereich liegt.

Dieses Ausgangssignal dient zum Ansteuern eines Mobiltelefones 28, welches in Figur 1 schematisch angedeutet ist.

Das Mobiltelefon 28 ist so programmiert, daß es nach Herstellen einer Verbindung zunächst eine in ihm gespeicherte Senderkennung abgibt.

Ein zweites Mobiltelefon 30 befindet sich entweder in einem Gebäude oder wird von einem Benutzer mit sich getragen. Das Mobiltelefon 30 zeigt einlaufende Senderkennungen auf seinem Display an, und sieht der Benutzer auf dem Display des Mobiltelefons 30 die Senderkennung des Mobiltelefons 28, so weiß er, daß im Stall 10 oder auf der Koppel 22 eine Änderung eingetreten ist, die es notwendig macht, daß er vor Ort nachsieht.

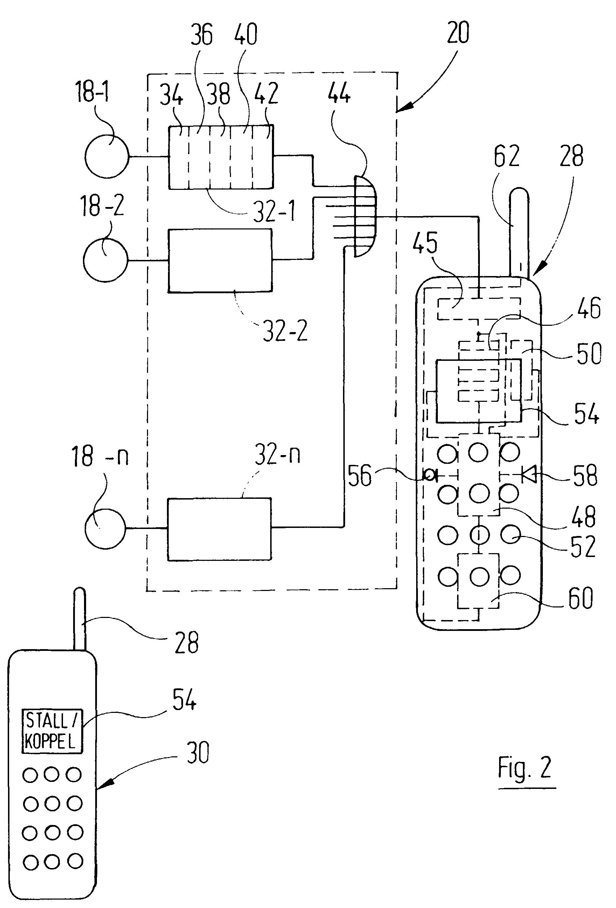

Wie aus Figur 2 ersichtlich, ist an die Ausgänge der verschiedenen Fühler 18 jeweils ein zur Auswerteeinheit 20 gehörender zugeordneter Betriebs/Auswertekreis 32-1, 32-2, bis 32-n vorgesehen.

Die Betriebs/Auswertekreise 32 arbeiten insgesamt so, daß sie immer dann ein Ausgangssignal bereitstellen, wenn das Ausgangssignal des zugeordneten Fühlers 18 außerhalb eines vorgegebenen Signalbereiches liegt.

Hierzu kann ein Betriebs/Auswertekreis 32, wie für den Betriebs/Auswertekreis 32-1 angedeutet, eine Spannungsquelle 34, welche den Fühler mit Strom versorgt, einen Eingangsverstärker 36, ein Filter 38, welcher das Ausgangssignal des Fühlers 18 entrauscht und ggf. gleichrichtet, ein Diskriminatorkreis 40, der prüft, ob das Ausgangssignal des Fühlers innerhalb vorgegebener Grenzen liegt, und ein Skalierverstärker 42 gehören, der das Ausgangssignal des Diskriminatorkreises 40 auf einen Standard-Pegel bringt, der direkt von digitalen Schaltkreisen verarbeitet werden kann.

Die Ausgangssignale der verschiedenen Betriebs/Auswertekreise 32 werden durch ein ODER-Glied 44 zusammengefaßt. Dieses kann im Prinzip auch durch einfache Leitungsknoten gebildet sein. Das Ausgangssignal des ODER-Gliedes 44 dient zum Aktivieren eines Rufeinleitkreises 45, der zum Mobiltelefon 28 gehört. Dieser wählt aus einem Rufnummernspeicher 46 die Rufnummer des Mobiltelefones 30 aus. Zugleich wird eine zentrale Steuereinheit 48 des Mobiltelefones aktiviert.

Die Steuereinheit 48 wählt nun die gemäß der vom Rufnummernspeicher 46 gewünschte Telefoneinheit an und übermittelt nach Herstellen der Verbindung eine Senderkennung des Mobiltelefones 28, die in einem Kennungsspeicher 50 abgelegt ist. Dieser kann in bei Mobiltelefonen üblicherweise durch Tasten 52 programmiert werden, die zum Bedienfeld des Mobiltelefones 28 gehören.

An die Steuereinheit 48 sind ferner angeschlossen ein Display 54, ein Mikrofon 56, ein Lautsprecher 58 sowie eine Sende/Empfangseinheit 60, die mit einer Antenne 62 verbunden ist.

Das Mobiltelefon 28 unterscheidet sich vom Mobiltelefon 30 nur durch einen kleinen Eingriff, welcher darin besteht, daß der Rufkreis 44 nicht nur durch Betätigung einer der Tasten 52 sondern auch durch das Ausgangssignal des ODER-Gliedes 44 aktivierbar ist. Dieser kleine Eingriff läßt sich mit geringen Kosten realisieren.

Das Mobiltelefon 30 hat abgesehen von dieser Modifikation gleichen Aufbau. Entsprechende Komponenten des Telefons sind - wo erforderlich - wieder mit demselben Bezugszeichen versehen.

Vorzugsweise wird im Kennungsspeicher 50 eine Zeichenfolge abgelegt, die einer Buchstabenfolge entspricht, z.B. "Stall/Koppel". Auf diese Weise kann das Mobiltelefon 30 das gemeinsame empfangende Mobiltelefon einer Vielzahl von Überwachungseinrichtungen bilden, die unterschiedliche Objekte überwachen. Dabei wird in dem Kennungsspeicher 50 jeweils eine Buchstabenfolge einprogrammiert, welche das überwachte Projekt erkennen läßt.

Man erkennt, daß die oben beschriebene Überwachungseinrichtung mit geringen Kosten unter Verwendung handelsüblicher Mobiltelefone aufgebaut werden kann. Sie läßt sich auch zur Überwachung von Objekten einsetzen, die an Orten liegen, wo kein Anschluß an das öffentliche Stromnetz und/oder kein Anschluß an das herkömmliche Telefonnetz gegeben ist.

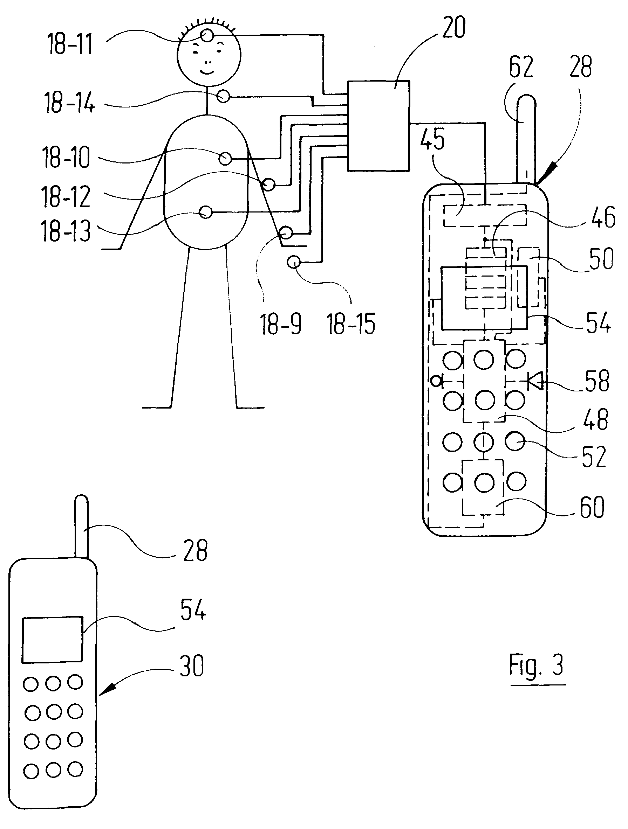

Die oben beschriebene Überwachungseinrichtung läßt sich auch zur Überwachung bewegter Objekte verwenden. So ist in Figur 3 schematisch eine Überwachungseinrichtung gezeigt, die sich zur Überwachung eines Infarktpatienten eignet. Vom elektronischen Aufbau her ist die Überwachungseinrichtung der schon unter Bezugnahme auf die Figuren 1 und 2 erläuterten Überwachungseinrichtung vergleichbar.

Ein Unterschied besteht in den verwendeten Fühlern: Ein Fühler 18-9 überwacht den Puls, ein weiterer Fühler 18-10 kann ein portables EKG-Gerät sein, ein Fühler 18-11 kann die Hautfeuchtigkeit (Anzeigen für Streßsituation) messen, ein Dehnungsmeßstreifen 18-12 kann die Stellung eines Körperteiles (z.B. eines Gelenkes) überwachen, ein Lagesensor 18-13 kann feststellen, ob die überwachte Person aufrecht steht oder sitzt oder gestürzt ist, ein Mikrofon 18-14 kann auf Hilferufe der überwachten Person ansprechen, und ein Taster 18-15 kann von der überwachten Person manuell betätigt werden, um Hilfe herbeizurufen.

Auf Grund der umfassenden Überwachung kann der Infarktpatient gefahrlos eine größere Freiheit wahrnehmen (Spaziergänge usw.) als dies ohne Überwachung möglich wäre. Da die Überwachung durch Mobiltelefone erfolgt, kann sich der Patient auch weiter vom Krankenhaus entfernen oder Reisen machen. Dieser Freiheitsgewinn wird ohne größere Kosten erhalten, da die erfindungsgemäße Überwachungseinrichtung von preiswerter Großtechnologie Gebrauch macht.

Weitere in der Zeichnung nicht dargestellte Fühler können die Überwachungseinrichtung selbst überwachen, z.B. ausreichenden Ladezustand des Akkumulators des Mobiltelefones 28 und korrekte Verbindung zwischen Auswerteeinheit 20 und Mobiltelefon oder die Betätigung einer Taste des Mobiltelefones 28.

## Patentansprüche

1. Überwachungseinrichtung mit mindestens einem auf einen Umweltparameter ansprechenden Fühler (18), mit einer mit den Fühlern (18) zusammenarbeitenden Auswerteeinheit (20) und mit einer durch die Auswerteeinheit (20) gesteuerten selbstwählenden ersten Telefoneinheit (28) sowie mit einer zweiten Telefoneinheit (30), dadurch gekennzeichnet, daß die erste Telefoneinheit (28) und die zweite Telefoneinheit (30) beide digitale oder ISDN-Telefoneinheiten sind und die erste Telefoneinheit (28) so programmiert ist, daß sie nach Herstellen einer Verbindung eine Senderkennung abgibt, und daß die zweite Telefoneinheit (30) erhaltene Senderkennungen auf einem Display (54) darstellt.

2. Überwachungseinrichtung nach Anspruch 1, dadurch gekennzeichnet, daß die erste Telefoneinheit (28) ein Mobiltelefon ist.

3. Überwachungseinrichtung nach Anspruch 1 oder 2, dadurch gekennzeichnet, daß die zweite Telefoneinheit (30) ein Mobiltelefon ist.

4. Überwachungseinrichtung nach einem der Ansprüche 1 bis 3, dadurch gekennzeichnet, daß sie mehrere Fühler (18) umfaßt und deren Ausgangssignale durch ein ODER-Glied (44) zusammengefaßt werden und daß die erste Telefoneinheit (28) durch das Ausgangssignal des ODER-Gliedes (44) zum Selbstwählen einer vorgegeben Nummer aktiviert wird.

5. Überwachungseinrichtung nach Anspruch 4, gekennzeichnet durch den Fühlern nachgeschaltete Betriebs/Auswertekreise (32), die Ausgangssignale gleicher Standardgröße bereitstellen.

6. Überwachungseinrichtung nach Anspruch 5, dadurch gekennzeichnet, daß die Betriebs/Auswertekreise (32) umfassen: Spannungsquellen (34) und/oder Verstärker (36) und/oder Filter (38) und/oder Diskriminatorkreise (40) und/oder Skalierungskreise (42).

7. Überwachungseinrichtung nach einem der Ansprüche 1 bis 6, dadurch gekennzeichnet, daß ein Kennungsspeicher (50) der ersten Telefoneinheit (28) Textzeichen enthält.

8. Überwachungseinrichtung nach einem der Ansprüche 1 bis 7, dadurch gekennzeichnet, daß unter den Fühlern (18) einige oder mehrere aus den nachgenannten Fühlertypen sind: Fenster- oder Türkontakte, Glasbruchsensoren, Brandsensoren, Bewegungsmelder, Schallaufnehmer, auf physikalische Umweltparameter ansprechende Sensoren wie z.B. Temperatursensoren, auf das richtige Arbeiten von Geräten ansprechende Sensoren sowie manuell betätigbare Taster.

9. Überwachungseinrichtung nach einem der Ansprüche 1 bis 8, dadurch gekennzeichnet, daß zumindest ein Teil der Fühler (18) durch eine Batterie oder einen Akkumulator (34) gespeist ist.

10. Überwachungseinrichtung nach einem der Ansprüche 1 bis 9, dadurch gekennzeichnet, daß einer der Fühler ein Fühler ist, der anspricht, wenn eine der Tasten der ersten Telefoneinheit (28) betätigt wird.

11. Überwachungseinrichtung nach einem der Ansprüche 1 bis 10, dadurch gekennzeichnet, daß einer der Fühler ein Fühler ist, der auf das Unterbrechen der Verbindung zwischen Auswerteinheit (20) und erster Telefoneinheit oder ein unzulässiges Abfallen einer Versorgungsspannungsquelle der ersten Telefoneinheit (28) anspricht.
